(19) Europäisches Patentamt
European Patent Office
Office européen des brevets

(11) **EP 4 292 049 B1**

(12) **EUROPEAN PATENT SPECIFICATION**

(45) Date of publication and mention
of the grant of the patent:
**01.07.2026 Bulletin 2026/27**

(21) Application number: **22753551.5**

(22) Date of filing: **10.02.2022**

(51) International Patent Classification (IPC):
*G06T 7/73* (2017.01)    *G01N 35/00* (2006.01)
*G01N 35/04* (2006.01)

(52) Cooperative Patent Classification (CPC):
**G01N 35/00732; G01N 35/04; G06T 7/73;**
G01N 2035/0406; G06T 2207/10024;
G06T 2207/30024; G06T 2207/30204

(86) International application number:
**PCT/US2022/070605**

(87) International publication number:
**WO 2022/174239 (18.08.2022 Gazette 2022/33)**

(54) **METHODS AND APPARATUS ADAPTED TO IDENTIFY 3D CENTER LOCATION OF A SPECIMEN CONTAINER USING A SINGLE IMAGE CAPTURE DEVICE**

VERFAHREN UND VORRICHTUNG ZUR IDENTIFIZIERUNG DER 3D-ZENTRUMSPOSITION EINES PROBENBEHÄLTERS UNTER VERWENDUNG EINER EINZELBILDAUFNAHMEVORRICHTUNG

PROCÉDÉS ET APPAREIL CONÇUS POUR IDENTIFIER UN EMPLACEMENT CENTRAL 3D D'UN RÉCIPIENT D'ÉCHANTILLON À L'AIDE D'UN DISPOSITIF DE CAPTURE D'IMAGE UNIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.02.2021 US 202163148529 P**

(43) Date of publication of application:
**20.12.2023 Bulletin 2023/51**

(73) Proprietor: **Siemens Healthcare Diagnostics, Inc.**
**Tarrytown, NY 10591 (US)**

(72) Inventors:
• **NALAM VENKAT, Rayal Raj Prasad**
  **Princeton, New Jersey 08542 (US)**
• **CHANG, Yao-Jen**
  **Princeton, New Jersey 08540 (US)**
• **POLLACK, Benjamin S.**
  **Jersey City, New Jersey 07302 (US)**
• **KAPOOR, Ankur**
  **Plainsboro, New Jersey 08536 (US)**

(74) Representative: **Schweitzer, Klaus**
  **Dr. Müller Patentanwälte**
  **Mühlstraße 9A**
  **65597 Hünfelden (DE)**

(56) References cited:
US-A- 4 453 085         US-A1- 2013 163 815
US-A1- 2017 124 704     US-A1- 2017 124 704
US-A1- 2018 365 530     US-A1- 2018 365 530
US-B2- 10 140 705

EP 4 292 049 B1

Description

## CROSS REFERENCE TO RELATED APPLICATION

This application claims the benefit of U.S. Provisional Patent Application No. 63/148,529, entitled "METHODS AND APPARATUS ADAPTED TO IDENTIFY 3D CENTER LOCATION OF A SPECIMEN CONTAINER USING A SINGLE IMAGE CAPTURE DEVICE" filed February 11, 2021.

## FIELD

The present disclosure relates to methods and apparatus for use in biological specimen testing, and, more particularly, to methods and apparatus for characterizing a specimen container in biological specimen testing.

BACKGROUND

Automated testing systems may conduct immunoassays or clinical chemistry analysis to identify an analyte or other constituent in a specimen such as blood serum, blood plasma, urine, interstitial liquid, cerebrospinal liquids, and the like. For convenience and safety reasons, these specimens are almost universally contained within specimen containers (e.g., blood collection tubes), which may be capped with a colored cap. Some of the specimen is removed from the specimen container and is subjected to analysis via an assay and/or clinical chemistry analysis. The reactions during the assays or clinical chemistry analysis generate various changes that may be read and/or manipulated to determine a concentration of an analyte or other constituent contained in the specimen, that may, in some embodiments, be suggestive of a patient's disease state.

Improvements in automated testing technology have been accompanied by corresponding advances in pre-analytical sample preparation and handling operations such as centrifugation of specimen containers to separate sample constituents, cap removal (de-capping) to facilitate specimen access, aliquot preparation, and quality checks, which may be used to identify specimen container dimensions, such as height and width, and/or the presence of an interferent such as hemolysis, icterus, or Lipemia (HIL) or the presence of an artifact, such as a clot, bubble, or foam. Such pre-analytical devices may be part of a laboratory automation system (LAS). LAS may automatically transport specimens in specimen containers to one or more pre-analytical sample processing stations on a track, so that various pre-processing operations can be performed thereon prior to performing the analysis.

The LAS may handle a number of different specimens contained in barcode-labeled specimen containers (e.g., tubes). The barcode label may contain an accession number correlated to demographic information from a Laboratory Information System (LIS) along with test orders and other desired information. An operator or robot may place the labeled specimen containers onto the LAS system, which may automatically route the specimen containers along the track for pre-analytical operations, and all prior to subjecting the specimen to an assay or clinical chemistry analysis by one or more analyzers that may be coupled to or part of the LAS.

In such testing systems, the specimen containers presented for analysis may be of varying sizes, such as of differing height and differing widths (e.g., diameters) and identification thereof is desired. The prior art document US2017124704 A1 discloses methods and systems for detecting properties of sample tubes in a laboratory environment include a drawer vision system that can be trained and calibrated. Images of a tube tray captured by at least one camera are analyzed to extract image patches that allow a processor to automatically determine if a tube slot is occupied, if the tube has a cap, and if the tube has a tube top cup. The processor can be trained using a random forest technique and a plurality of training image patches. Cameras can be calibrated using a three-dimensional calibration target that can be inserted into the drawer.

## SUMMARY

The disclosure is directed at a method of determining a location of a specimen container on a track according to claim 1. The method includes providing a calibration object on the track; providing an initially calibrated image capture device adjacent to the track; moving the calibration object to at least two different longitudinal positions along the track including a first longitudinal position and a second longitudinal position, the first longitudinal position being different than the second longitudinal position; capturing a first image with the image capture device with the calibration object located at the first longitudinal position; capturing a second image with the image capture device with the calibration object located at the second longitudinal position; and determining a three-dimensional path trajectory of a center location along the track based at least upon the first image and the second image.

Further, a characterization apparatus is disclosed herein. The characterization apparatus includes a calibration object moveable on a track, a calibrated image capture device located adjacent to the track, and a computer coupled to the calibrated image capture device, the computer configured and operable to cause: the calibration object to move to at least two different longitudinal positions along the track including a first longitudinal position and a second longitudinal position, wherein the second longitudinal position is different from the first longitudinal position, capture a first image with the calibrated image capture device with the calibrated object located at the first longitudinal position, capture a second image with the calibrated image capture device with the calibrated object located at the second longitudinal position, and determine a three-dimensional path trajectory of a center location along the track based at least upon the first image and the second image. A 3D center location of a specimen container stopped anywhere within an imaging area can be determined based on the three-dimensional path trajectory of a center location.

Further, the disclosure is directed to a specimen testing apparatus according to claim 9. The testing apparatus includes a track; specimen carriers moveable on the track, the specimen carriers configured to carry specimen containers; and one or more characterization apparatus arranged around the track, each of the one or more characterization apparatus, comprising: a calibrated image capture device adjacent to the track; and a computer coupled to the calibrated image capture device and configured to: determine a three-dimensional path trajectory of a center location along a segment of the track based at least upon a first image and a second image taken of a calibration object at an imaging area; cause a specimen container carried by a carrier on the track to move to the an imaging area; cause imaging of the specimen container within the imaging area to obtain an container image; determining a center plane between lateral edges of the specimen container; and back-project the center plane to find an intersection point between the center plane and the three-dimensional path trajectory, wherein the intersection point is a three-dimensional center of the specimen container at the position of the center plane.

## BRIEF DESCRIPTION OF THE DRAWINGS

FIG. 1 illustrates a top view of a specimen testing apparatus including one or more characterization apparatus configured to determine a 3D center location of a specimen container and one or more analyzers (e.g., clinical chemistry or assay instruments) according to one or more embodiments of the disclosure.

FIG. 2 illustrates a side view of a labeled specimen container whose 3-dimensional (3D) center location may be quantified by a characterization method and characterization apparatus according to one or more embodiments of the disclosure.

FIG. 3A illustrates a perspective view of a characterization apparatus (with an outline of the housing portion shown as dotted to aid in illustration) configured to capture multiple images, with a calibration object shown in a second position along a track according to one or more embodiments of the disclosure.

FIG. 3B illustrates a perspective view of a characterization apparatus configured to capture an image of a specimen container at a position along the track within an imaging area and determine a 3D center location thereof according to one or more embodiments of the disclosure.

FIG. 3C illustrates a schematic top view of a characterization apparatus configured to capture images of a calibration object at first and second positions spaced along the track and determine a 3D path trajectory along the track according to one or more embodiments of the disclosure.

FIG. 3D illustrates a lateral image of a specimen container at position along the track in the image area from which the 3D center location of the specimen container at that position can be determined according to one or more embodiments of the disclosure.

FIGs. 4A illustrates a schematic top view of a characterization apparatus configured to determine a 3D center location of a specimen container at a position within an imaging area along a track according to one or more embodiments of the disclosure.

FIG. 4B illustrates a schematic side view (with outline of housing portion shown dotted to aid illustration) of the characterization apparatus of FIG. 4A (with the lighting source 300B not shown for illustration purposes) according to one or more embodiments of the disclosure.

FIG. 5 illustrates a flowchart of functional components of a characterization apparatus adapted to characterize a specimen container and specimen according to one or more embodiments.

FIG. 6 illustrates flowchart of a method adapted to characterize a 3D trajectory path of a specimen container according to one or more embodiments.

FIG. 7 illustrates flowchart of a method of characterizing a 3D center location of a specimen container according to one or more embodiments.

## DETAILED DESCRIPTION

Because of tolerance buildups and variability, the exact location of the three-dimensional (3D) center location of the specimen container at locations along the track and specifically at the locations in front of various pre-analytical operations and analyzers may be unknown. Because of the difficulties encountered in determining the exact location of the specimen container in 3D (a center location thereof) and/or the size or type of specimen container, there is an unmet need for methods and apparatus adapted to readily and accurately determine such center location, as well as such sizes.

In particular, at one or more pre-analytical stages, it may be desirable to obtain the various a specimen containers 3D center location and specimen container sizes, since this information can help inform the pre-analytical apparatus (e.g., centrifuge, decapper, aspirator, etc.) of the alignments that should be followed. Furthermore, this acts as a fail-safe in the event of an unsupported tube geometry being introduced into the specimen testing system. In another aspect, when handling of the specimen containers by a robot, knowing the specimen container size and 3D center location can help the robot grippers be properly aligned to the specimen container in 3D space and thus avoid or minimize collisions there between. Further, knowing the specimen container size and 3D center location can aid in lowering pipettes for aspiration at the correct location to avoid specimen container/pipette collisions, and/or faulty aspirations.

In some prior quality check modules configured to assess container size, levels of specimen, and quality of the specimen such as determining levels of HIL therein, three cameras are provided that aid in providing a full 360-degree view the specimen contained in the specimen container. Therefore, it is possible in such conventional quality check modules to reconstruct the specimen container geometry in 3D space, once the cameras have been appropriately calibrated. Once such reconstruction using input from a plurality of cameras is complete, the height and width (e.g., diameter) can be determined fairly accurately.

However, in some systems, having three cameras to accomplish multi-view imaging is impractical from a cost standpoint. Accordingly, the present disclosure, in some embodiments, provides methods, apparatus, and systems that are capable of measuring a geometry of a specimen container and also computing 3D center coordinates of a 3D center location of the specimen container using just one image capture device (e.g., using a single camera). Moreover, in some LAS systems, knowing the location on the 3D center location of the specimen container within a quality check module may not translate into accurate location of the center location at other locations about the track, as accurate track positioning is challenging because of tolerance stack-ups and installation variations. By using a single-image capture device in a characterization apparatus in conjunction with the track that enables motion of the specimen container about the track, a simple and effective method and apparatus is achieved to determine 3D center locations and sizes of specimen containers at any desired location along the track in the LAS.

In some existing testing systems, the specimen container geometry is measured at a quality check module using just one of the multiple cameras in either of the following two ways. In a first method, a specimen container (e.g., tube) of known geometry (such as a cylindrical calibration tool) is moved to a pre-determined position on the track within the quality check module then captures an image. The height (HT) and width (W) are measured in pixels. When a differently sized specimen container is encountered, the differently sized specimen container is moved to the exact same position on the track as before and the height HT and width W thereof can be derived proportionally based on the previously obtained image measurement in pixels. While this method can fairly accurately derive height HT and width W, it cannot however provide a precise 3D center location estimate for the specimen container.

Thus, in a first broad aspect, embodiments of the present disclosure provide characterization methods, characterization apparatus, and specimen testing systems configured and capable of being operated (operable) to determine a 3D center location of the specimen container, as well as physical dimensions of a specimen container, such as width W, and height HT.

In one or more embodiments, the characterization method neither requires the specimen container to move to an exact pre-determined position each time, nor does it require prior computer aided drafting (CAD) information about the geometry of the track. Furthermore, the present characterization method derives a precise estimation of the 3D co-ordinates of the center location of the specimen container (that can be used for robot gripper and pipette alignment tasks) without the need for extremely tight tolerances in the mechanical setup. Finally, the present characterization method does not strictly require the track to be parallel to the image capture device (e.g., camera), and it can even handle cases where the track is slightly slanted or even curved as long as there is no overlapping point on the track along each line of sight from the image capture device.

Knowing the width W of the specimen container can be used for further quantification (e.g., volume) of the various portions of the specimen, such quantification of the volume of the serum or plasma portion, settled blood portion, or both. Height HT of the specimen container may be used by the any robotic system in the testing system to establish a home height for a pipette of a liquid aspiration system in order to minimize specimen container-pipette collisions when moving the pipette to accomplish an aspiration. Knowing the exact 3D center location of the specimen container also allows picking up of the specimen container with robotic grippers while avoiding specimen container-robot gripper collisions. Further, HT and W and the exact 3D center location may be used so to locate and appropriately separate jaws of any robot grippers such that the grippers may appropriately grasp the specimen containers.

According to the disclosure, the characterization method can use a single image capture device (e.g., camera) located along the track at any location where it is useful to know the 3D center location and/or size of the specimen container. For example, a characterization apparatus can be implemented at a location within a quality check module, at an centrifuge station, such as at an a centrifuge pick location thereof, at an aliquoter aspiration/dispense location, at any other robot pick and/or place location on a track, at an analyzer location, or at any other suitable location where a robotic pick or place operation is repeatedly occurring.

The characterization method involves first mapping out the track path at a desired area of interest in three-dimensional (3D) space. For example, the characterization method can involve taking multiple images of the same calibration object (e.g., a calibration tool) at various longitudinal positions along the track at an imaging area, and from those images determine a 3D trajectory of the center along the track. This is done for a calibration object of known geometry, and using this trajectory, the calibration method can map a calibration object's center in three-dimensional space. The present method is applicable to any image capture devoice (e.g., camera) and track setup, such as in automated diagnostics equipment.

In particular, the track carries the specimens in specimen containers to various locations for analysis (e.g., analytical testing or assaying) on carriers and the other locations about the track may use the geometrical dimensions (W and HT) and the 3D center location determined from the quality check module, albeit it may not be fully accurate at those locations. For more accurate 3D center location, one or more characterization apparatus may be included at other locations about the track. Following pre-screening at a quality check module, chemical analysis or assaying may take place on a suitable analyzer. The term "analyzer" is used herein to mean a clinical chemistry analyzer, and/or an assaying instrument, and/or the like. In one embodiment, the quality check module may be provided on the track so that the specimen container may be characterized for dimensions while resident on the track, such as on an input lane of the track or elsewhere along the track.

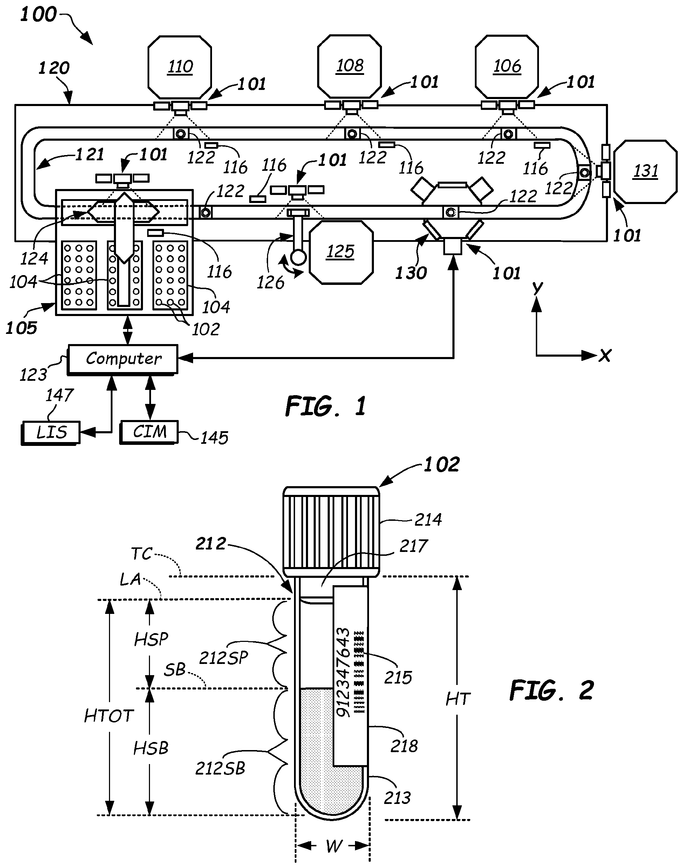

Further details of inventive characterization methods, characterization apparatus, and testing systems including one or more characterization apparatus will be described with reference to FIGs. 1-7 herein.

FIG. 1 shows an example embodiment of specimen testing apparatus 100 capable of, and operable to, automatically process multiple ones of the specimen containers 102 that may be contained in one or more racks 104 provided at a loading area 105 prior to analysis by one or more analyzers (e.g., first, second, and third analyzer 106, 108, 110, respectively), arranged about the track 121 of the specimen testing apparatus 100. It should be apparent that more or less numbers of analyzers can be used. The analyzers 106, 108, 110 may be one or more clinical chemistry analyzers and/or one or more assaying instruments, or the like, or combinations thereof. The specimen containers 102 may be any generally transparent or translucent container, such as blood collection tubes (see FIG. 2). The specimen containers 102 may be moved about the track 121 on carriers 122, as is described later herein. In more detail, specimen testing apparatus 100 may include a base 120 (e.g., a frame or other structure) upon which a track 121 may be mounted or supported.

As shown in FIG. 2, specimen 212 to be automatically processed may be provided to the specimen testing apparatus 100 in the specimen containers 102, which may be capped with a cap 214. The caps 214 may have different shapes and/or colors (e.g., red, royal blue, light blue, green, grey, tan, yellow, or other colors). The colors and/or shapes provide useful information about the testing to be performed, and/or the additives that are provided in the specimen container 102. Each of the specimen containers 102 may include a tube 213 that may be provided with a label 218 containing identification information 215, such as a barcode, alphabetic, numeric, or alphanumeric indicia, or combination thereof that may be machine readable at various locations about the specimen testing apparatus 100. The identification information 215 may indicate a patient's identification and possibly tests be accomplished upon the specimen 212, for example. The identification information 215 may also be coordinated with a laboratory information system (LIS) 147 to provide additional information on the testing ordered or the like. The label 218 is adhered to, or otherwise provided on the side of, the specimen container 102. The label 218 generally does not extend all the way around the girth of the specimen container 102, or all along a length of the specimen container 102. Accordingly, although the label 218 may occlude some portion of the specimen 212, some portion of the specimen 212 may still be viewable. In some embodiments multiple slightly overlapping labels 218 may be present. In some embodiments, the racks 104 may have additional identification information thereon that may be used for specimen tracking. As should be recognized, the un-occluded area can be oriented by manual or automated means to reside on the carrier 122 such that the un-occluded area faces a desired location, such as towards a particular image capture device,

Again referring to FIG. 1, a robot 124, being appropriately calibrated, can pick up a desired specimen container 102 from the one or more racks 104 and place the specimen container 102 into a carrier 122 located at a preprogrammed location on the track 121 or at an input lane of the track (not shown) via control commands from the computer 123. Computer 123 may include a microprocessor-based central processing unit CPU, suitable memory, software, and conditioning electronics and drivers for operating the various testing system components. Computer 123 may be housed as part of, or separate from, the base 120 of the specimen testing apparatus 100. The computer 123 may operate to control movement of the carriers 122 to and from the loading area 105, motion about the track 121, motion to and from the centrifuge station 125, operation of the centrifuge station 125, motion to and from the quality check module 130 as well as operation of the quality check module 130, motion to and from than aliquoting station 131 as well as operation of the aliquoting station 131, and motion to and from each analyzer 106, 108, 110. Computer 123 may also interface with and carry out calculations and operation of the one or more characterization apparatus 101 located about the track 121. In most cases, operation of each analyzer 106, 108, 110 carrying out the various types of testing (e.g., assay and/or clinical chemistry) is conducted by internal software that can interface with the computer 123.

Loading area 105 may serve a dual function of also allowing offloading of the specimen containers 102 from the carriers 122 after processing. Robot grippers of the robot 124 may be configured to grasp the specimen containers 102 from the one or more racks 104 and move and load the specimen containers 102 onto the carriers 122, generally one per carrier 122. In some embodiments, robot 124 can be configured to remove specimen containers 102 from the carriers 122 upon completion of testing. The robot 124 may include one or more (e.g., least two) robot arms or components capable of X and Z (perpendicular to the X-Y plane), Y and Z, X, Y, and Z, or r and theta motion, wherein the robot 124 may be equipped with robotic grippers adapted to pick up and place the specimen containers 102 by grasping the sides thereof. However, any suitable type of robot 124 may be used.

Upon being loaded onto track 121 by robot 124, the specimen containers 102 carried by carriers 122 may progress to a centrifuge station 125 (e.g., an automated centrifuge configured to carry out fractionation of the specimen 212). A characterization apparatus 101 may be provided at a location adjacent to the centrifuge station 125 and track 121, such as where a load/unload robot 126 may pick up the specimen container 102 from the carrier 122 and place it into a centrifuge of the centrifuge station 125. Knowing the exact 3D center location of the specimen container 102 this location (or at any other location about the track) where the carrier 122 stops helps to avoid robot gripper-container collisions that may spill specimen 212 or break the specimen container 102, as the robot knows the exact position of the center location of the specimen container 102 at that location. As will be recognized, a characterization apparatus 101, as described herein, can be used at any location where the 3D center location is desired to be known. For example, a characterization apparatus 101 may be positioned at loading area 105, quality check module 130 (using one or the image capture devices thereof), aliquoting station 131 so as to avoid pipette-container collisions that may spill specimen 212, break the specimen container 102, or pipette, and at one or more of the analyzers 106, 108, 110 to avoid pipette-container collisions or robot-container collisions. Characterization apparatus 101 may be positioned at other locations.

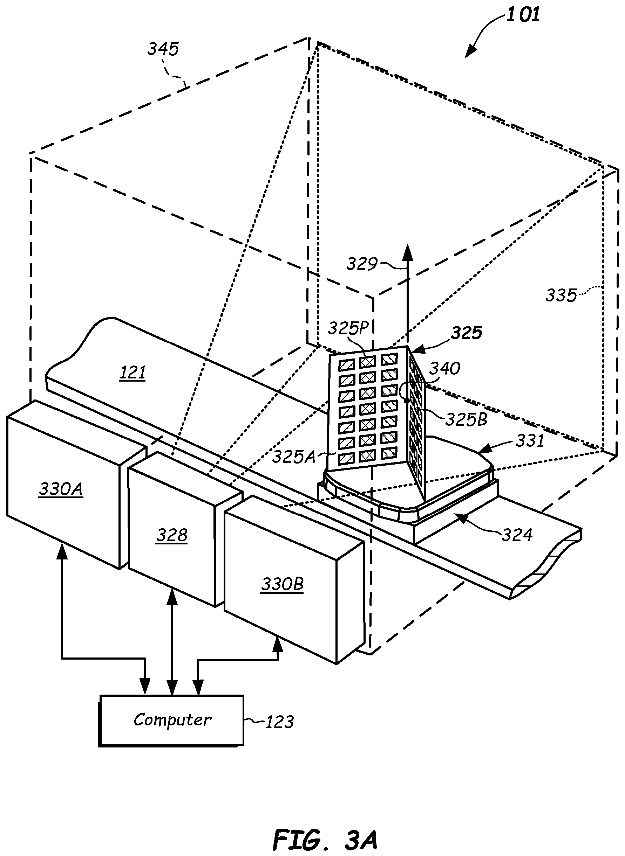

FIGs. 3A through 3D illustrate one example embodiment of a characterization apparatus 101. Characterization apparatus 101 includes a calibration object 325 that is moveable on a track 121 (only a portion of track 121 shown in FIGs. 3A-3C). Track 121 may be a railed track (e.g., monorail track or multiple rail track), a collection of conveyor belts, chains, moveable platforms, or other suitable conveyance mechanisms. Track 121 may have a circular, serpentine, or other shape, and may be a closed (i.e., never ending) track in some embodiments. Track 121 may transport individual ones of the specimen containers 102 by carriers 122, or multiple ones of the specimen containers 102 on each carrier 122 in some embodiments. In some embodiments, specimen container 102 is configured to be received in a receptacle of the carrier 122 moveable on the track 121 in an upright orientation.

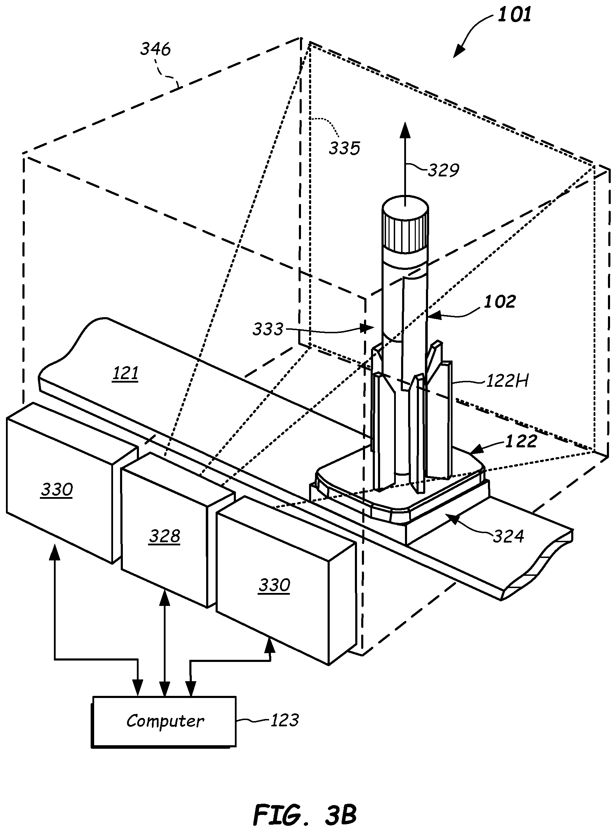

In the depicted embodiment, the carrier 122 can be carried on the track 121 by a cart 324, for example. Cart 324 may be programmed, commanded, or otherwise forced to stop at desired locations along the track 121. Carrier 122 may be removable from the cart 324 and may include any suitable means for registration to the cart 324, such as multiple pins registering in holes, for example. This positions the carrier 122 on the cart 324 in a fixed orientation. In some embodiments, the cart 324 may include an onboard drive motor, such as a linear motor, that is configured to move the specimen container 102 about the track 121, while stopping at desired locations along the track 121 according to programmed instructions. Carriers 122 may each include a holder 122H (FIG. 3B) adapted to hold and secure the specimen container 102 in a defined upright position. Holder 122H may include three or more leaf springs or fingers providing a common center when the specimen container 102 is inserted therein. Use of leaf springs allows different widths W of the specimen container 102 to be accommodated by the carrier 122, while still positioning the specimen containers 102 at a common center location on the carrier 122. In some embodiments, cart 324 and carrier 122 may be integral.

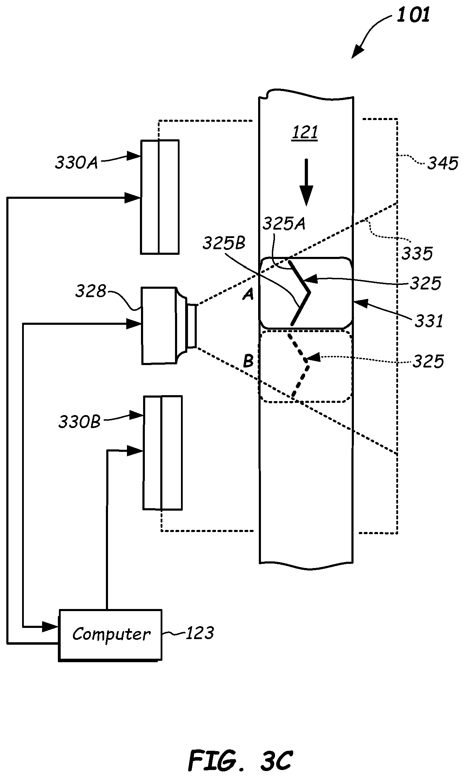

The calibration object 325, as best shown in FIGs. 3A and 3C, can comprise a V-shaped marker tool with at least a first planar face 325A and a second planar face 325B disposed at an angle thereto. For example, the two faces 325A, 325B may be disposed at an included angle to each other of from about 90 degrees to about 150 degrees. In some embodiments, a third face planar face is provided, which can have approximately 120 degrees between all of the faces. In particular, the calibration object 325 comprises a three-dimensional tool with a known geometry and one or more calibrated patterns 325P provided on each of the faces 325A, 325B, whose positions on the three-dimensional tool are known. Any suitable pattern may be used, such as a checkerboard pattern, or one or more edge-identifiable geometric objects. The calibration object 325 can include a center location, designated by axis 329, which can be positioned on a base 331 at a same center location as the center of a holder 122H of the carrier 122, i.e., the center location 329 of the specimen container 102 when held in the holder 122H. Thus, the center 329 of the calibration object 325 is the same as the center 329 of the holder 122H of the carrier 122, i.e., the center location 329 of the specimen container 102 when held in the holder 122H. Base 331 is positioned on the cart 324 in a fixed orientation and thus the calibration object 325 and base 331 move with the cart 324. The dimensions and positions of the calibrated patterns 325P are known, as are the spatial relationships to the axis 329 and the base 331. In some embodiments, the V-shaped marker tool includes Hoffman markers provided thereon that have a known position and geometry relative to the center 329 and the base 331 and thus relative to the cart 324.

Characterization apparatus 101 further includes a calibrated image capture device 328 located at a position adjacent to the track 121, such as along a lateral side thereof. The calibrated image capture device 328 can be calibrated by any suitable means to obtain intrinsic properties (e.g., focal length, image center, skew, and lens distortion coefficients) of the image capture device 328, such as by using standard, automated, calibration techniques (e.g., camera-calibration techniques). These calibration techniques typically involve using printed planar targets (e.g. Hoffman marker grid or checkerboard pattern) of known dimensions and applying iterative refinement techniques to determine the intrinsic parameters of the image capture device 328. Knowing the intrinsic properties of the image capture device 328 is a prerequisite to any 3D imaging task, as it enables estimating a scene's structure in Euclidean space while removing at least some inaccuracies caused by any lens distortion (e.g., that may stem from imperfect lens manufacturing).

Calibrated image capture device 328 can be any combination of focusing lens system and one or more sensors. For example, the calibrated image capture device 328 may be conventional digital camera (e.g., color or monochrome camera), or a charged coupled device (CCD), an array of photodetectors, one or more CMOS sensors, or the like coupled with any suitable focusing lens system. For example, calibrated image capture device 328 may be configured to capture images at multiple different imaging locations (including location A and second location B) along the track 121. The calibrated image capture device 328 may be a device capable of capturing a digital image (i.e., a pixelated image) at the multiple different imaging locations. The image resolution of each image may be about 0.5 MP or more, such as from 0.5MP to 10 MP, for example. Other pixel resolutions may be used. Calibrated image capture device 328 may be a high-speed image capture device, and although desirable to stop the calibration object 325 at first location A and second location B and the carrier 122 at an imaging location, if the speed is fast enough, the images may be taken while the carrier 122 or base 331 and calibration object 325 are still moving.

Characterization apparatus 101 further includes a computer 123 coupled to the calibrated image capture device 328, such as by a USB cable or the like. The computer 123 is configured and operable to cause the calibrated image capture device 328 to capture lateral images of the calibration object 325 at the multiple imaging locations (A and B) along the track 121. As the imaging takes place, the calibration object 325 may be illuminated. For example, the illumination of the calibration object 325 may be by one or more light sources 330A, 330B, such as light panels described in US20110041318, providing illumination. Light sources may be positioned relative the calibration object 325 so as to illuminate the faces 325A, 325B thereof. For example, light panels may provide front lighting and can be positioned in front of the calibration object 325, and may comprise multiple light sources 330A, 330B positioned on either lateral side of the calibrated image capture device 328, for example. Other positioning and forms of light sources may be used.

In particular, the computer 123, through drive signals to cart 324, can causes the calibration object 325 to move to at least two different longitudinal positions along the track 121 within the imaging area 335 (e.g., a wide angle viewing area) including at least a first longitudinal position A and a second longitudinal position B (position shown dotted) as shown in FIG. 3C, wherein the second longitudinal position B is different from the first longitudinal position A. The computer 123 can cause the calibrated image capture device 328, through appropriately-timed trigger signals, to capture a first image of the calibration object 325 with the calibrated image capture device 328 with the calibration object 325 located at the first longitudinal position A. The computer 123 can further command the cart 324 to move the calibration object 325 to the second longitudinal position B and capture a second image of the calibration object 325 with the calibrated image capture device 328, with the calibration object 325 located at the second longitudinal position B. The second longitudinal location B should be spaced sufficiently from the first longitudinal location A so that a representative and accurate travel path between them can be obtained in front of the location where the 3D center location 350 is desired to be determined later when the carrier 122 is carrying the specimen container 102 thereat. Furthermore, for even greater accuracy or for cases where the track segment is not linear, images may be captured at multiple longitudinal positions in between first position A and second position B. For example, a wide angle lens (35mm or less) may be used, having a short focal length and a wide field of view (e.g., 50 degrees or more). Other wide angle lenses may be used, as long as the calibration object 325 is located within the field of view (view window) of the calibrated image capture device 328.

According to the method, a three-dimensional path trajectory of a center location 340 along the track 121 is determined based at least upon the first image and the second image. The center location 340 can be at any predetermined height on the calibration object 325 and is determinable in relationship to the imaged location of two or more of the calibrated patterns 325P. In particular, one or more additional images may be taken if the path is other than linear, such as along a curve of the track 121. With the intrinsic camera parameters computed, such as focal length, image center, skew, and possibly the lens distortion coefficients (for more precision), the method can compute a relative extrinsic pose of the 3D center location 350 of the calibration object 325 with respect to the calibrated image capture device 328 for at least the first image and the second image. An algorithm like Perpsective-n-Point can be used to compute the relative extrinsic pose of the 3D center location 350 of the calibration object 325 with respect to the calibrated image capture device 328 for each image, such as for the first image and second image, and any other image that is captured. Perspective-n-Point is the problem of estimating the pose of a calibrated image capture device (e.g., camera) given a set of n three-dimensional points in the world and their corresponding 2D projections in the image. The pose of the image capture device 328 consists of 6 degrees-of-freedom, which are made up of the rotation (roll, pitch, and yaw) and 3D translation (X, Y, Z) of the image capture device 328 with respect to the world. Given a set of $n$ 3D points in a world reference frame and their corresponding 2D image projections as well as the calibrated intrinsic parameters, the 6 DOF pose of the image capture device 328 in the form of its rotation and translation with respect to the world can be determined as follows:

$$s\,p_c = K\,[\,R\,|\,T\,]\,p_w$$

where $p_w = [x\,y\,z\,1]^T$ is the homogeneous world point, $p_c = [u\,v\,1]^T$ is the corresponding homogeneous image point, K is the matrix of intrinsic parameters of the image capture device 328, where $fx$ and $fy$ are the scaled focal lengths, y is the skew parameter, which is sometimes assumed to be 0, and $(u_0, v_0)$ is the principal point, s is a scale factor for the image point, and R and T are the desired 3D rotation and 3D translation of the image capture device (extrinsic parameters) that are being calculated. This leads to the following equation for the model:

$$s \begin{bmatrix} u \\ v \\ 1 \end{bmatrix} = \begin{bmatrix} f_x & \gamma & u_0 \\ 0 & f_y & v_0 \\ 0 & 0 & 1 \end{bmatrix} \begin{bmatrix} r_{11} & r_{12} & r_{13} \\ r_{21} & r_{22} & r_{23} \\ r_{31} & r_{32} & r_{33} \end{bmatrix}$$

Optionally, P3P can be used when there are n=3 points, or EPnP for n≥ 4 points. RANSAC can be used if there are outliers.

Now that the three-dimensional path trajectory of a center location 340 along the track 121 is determined, in a next phase, the exact location of the 3D center location 350 of any specimen container 102 that is stopped within the imaging area 335 of the characterization apparatus 101 can be obtained. One particular advantage is that the stopping location of the carrier 122 need not be exact within the imaging area 335, as the method can determine the 3D center location 350 anywhere within the imaging area 335 as long as the sides and top of the specimen container 102 can be viewed/imaged therein. The imaging area 335 is the area that can be imaged by the calibrated image capture device 328. The image area 335 can be at least as tall as the expected specimen containers 102 and can be a wide angle as disclosed herein.

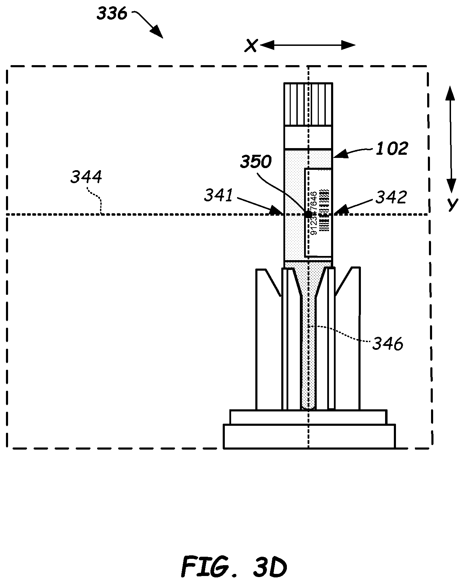

Once the three-dimensional path trajectory of a center location 340 along the track 121 is determined, the 3D center location 350 of the specimen container 102 at the imaging location within the imaging area 335 where the specimen container 102 is imaged is determined. As shown in FIG. 3D, a container image 336 of the specimen container 102 is captured with the calibrated image capture device 328 at an imaging location 333 with the carrier 122 stopped in the imaging area 335. As shown exaggerated, the carrier 122 need not be stopped at the exact center of the imaging area 335 in order to find the 3D center location 350, as any point on the trajectory can be mapped back to 2D image space. In particular, since the method has previously computed the extrinsic relationship between the track trajectory and the calibrated image capture device 328, we now also have a corresponding 2D trajectory in the image space. With this method, even estimating 3D center location 350 of a specimen container 102 along a slightly curved track can be accomplished, such as by fitting a polynomial function rather than a straight line, wherein more than two imaging locations are used.

Computing the center location of the specimen container

When presented with a specimen container 102 in the carrier 122 at the imaging location 333 of the characterization apparatus 101, the method can capture the container image 336 and estimate the 3D center location 350 of the specimen container 102 in the first two dimensions (2D) from the captured container image 336. In the image space, the method first computes the center of the specimen container 102 in the X dimension by determining the locations of a first edge 341 and second edge 342 in pixel space, having the same height as the center location 340, wherein the center point trajectory is designated by line 344. The edges 341, 342 can be found by any edge finding routine, such as by raster scanning across the trajectory path 344 to find the abrupt changes in light intensity above a preset threshold value. Raster scanning one or more times above and/or below the trajectory path 344 can be used to confirm that the edges 341, 342 are indeed edges when abrupt intensity changes are found at a same X location in pixel, such as space above and/or below. Once the location of vertical edges 341 and 342 are determined, the center point in 2D space (in the X-Y plane) along trajectory path 344 can be found by adding the two dimensions and dividing by two. The determined 2D centerline is shown as center plane 346. Intersection of trajectory path 344 and center plane 346 includes the 2D center point. The 2D center point can then be mapped to 3D space, i.e., mapped to the closest point on the 3D trajectory (in the Z dimension - into and out of the paper) to determine the 3D center location 350. The 3D center location 350 is computed by using the 2D image coordinates from the imaging of the specimen container 102 and projecting it into the Z-dimension using the intrinsic parameters of the calibrated image capture device 328, A way to think of this is drawing a line from the center of the image capture device 328 through 350 (in 3D Euclidean space) that extends until infinity, and finding the closest point on the 3D trajectory of 340 (i.e. 344 in 3D Euclidean space) that intersects with it. If there is no intersection, we may choose the point on 344 (in 3D Euclidean space) that minimizes the distance to the Z-projection of 3D center location 350. This point on trajectory path 344 is the 3D center location 350 of the specimen container 102. Thus, robot 126 can accurately know the 3D center location 350 of the specimen container 102 that it will use to pick the specimen container 102 so as to place the specimen container 102 into the centrifuge of the centrifuge station 125, and return the specimen container 102 to the carrier 122 after fractionation.

After fractionation by the centrifuge, the specimen 212 may include, as best shown in FIG. 2, a serum or plasma portion 212SP, a settled blood portion 212SB contained within the tube 213. Air 217 may be provided above the serum and plasma portion 212SP and the line or demarcation between air 217 and the serum or plasma portion 212SP is defined herein as the liquid-air interface (LA). The line of demarcation between the serum or plasma portion 212SP and the settled blood portion 212SB is defined herein as the serum-blood interface (SB). The interface between the air 217 and the cap 214 is referred to herein as the tube-cap interface (TC). The height of the tube (HT) is defined as the height from the physical bottommost part of the tube 213 to the bottom of the cap 214. The height of the serum or plasma portion 212SP is (HSP) is defined as the height from the top of the settled blood portion 212SB to the top of the serum or plasma portion 212SP, i.e., from SB to LA. The height of the settled blood portion 212SB is (HSB) is defined as the height from the bottom of the settled blood portion 212SB to the top of the settled blood portion 212SB. In embodiments where a gel separator is used, an interface between the serum or plasma portion 212SP and the gel separator is present. Likewise, an interface between the settled blood portion 212SB and the gel separator is present. HTOT is HSB plus HSP. W is the width of the tube 213. In some embodiments, the size of the specimen container 102 can be represented by the combination of width W and the height HT.

As was indicated above, the carriers 122 may move on to a quality check module 130. Optionally, the centrifugation may occur previously and the specimens 212 contained in specimen containers 102 may be loaded directly into a quality check module 130 that is located at the loading area 105, such as part of an input lane, for example. The quality check module 130 is configured and adapted to automatically determine/characterize physical attributes of the specimen container 102 containing the specimen 212 to be processed by the specimen testing apparatus 100. Characterization may include characterizing tube size, cap type, and/or cap color. Once characterized, the specimen 212 may be further characterized to determine the depth and/or volume of the specimen 212, screened for hemolysis, icterus, or Lipemia (HIL), and/or a presence of one or more artifacts, such as a clot, bubble, or foam. If found to contain no HIL and/or no artifact(s), the specimens 212 may continue on the track 121 and then may be analyzed in the one or more analyzers (e.g., first, second and third analyzers 106, 108, and/or 110) before returning each specimen container 102 to the loading area 105 for offloading.

In some embodiments, quantification of physical attributes of the specimen container 102 may take place at the quality check module 130 (i.e., determining height HT, width W, cap color, cap type, and or tube type). In some embodiments, quantification of the specimen 212 may also take place at the quality check module 130 and may involve determination of HSB, HSP, HTOT, and may determine a vertical location of SB and LA.

The specimen testing apparatus 100 may include a number of sensors 116 at one or more locations around the track 121. Sensors 116 may be used to detect a location of specimen containers 102 along the track 121 by means of reading the identification information 215 (FIG. 2) placed on the label 218, or like information (not shown) that is provided on each carrier 122, such as a barcode. Other means for tracking the location of the carriers 122 may be used. All of the sensors 116 interface with the computer 123 so that the location of each specimen container 102 and specimen 212 is known at all times. Computer 123 may interface and communicate with laboratory information system (LIS) 147 in a known manner to provide test results and status information to the requesters.

Embodiments of the present disclosure may be implemented using a computer interface module (CIM) 145 that allows for a user to easily and quickly access a variety of control and status display screens. These control and status screens may describe some or all aspects of a plurality of interrelated automated devices used for preparation and analysis of specimens 212. The CIM 145 may be employed to provide information about the operational status of a plurality of interrelated automated devices as well as information describing the location of any specimen 212 as well as a status of screening or tests to be performed on, or being performed on, the specimen 212. The CIM 145 may be adapted to facilitate interactions between an operator and the specimen testing apparatus 100. The CIM 145 may include a display screen adapted to display a menu including icons, scroll bars, boxes, and buttons through which the operator may interface with the specimen testing apparatus 100. The menu may comprise a number of function buttons programmed to display functional aspects of the specimen testing apparatus 100.

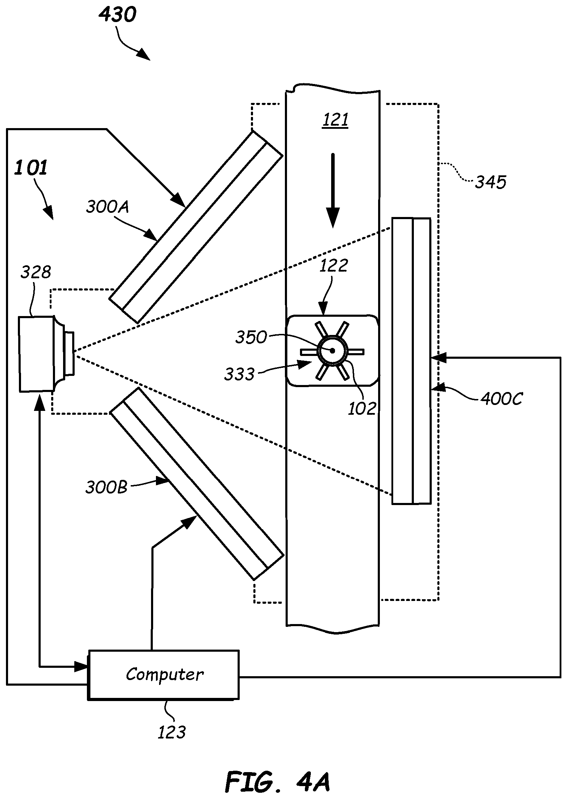

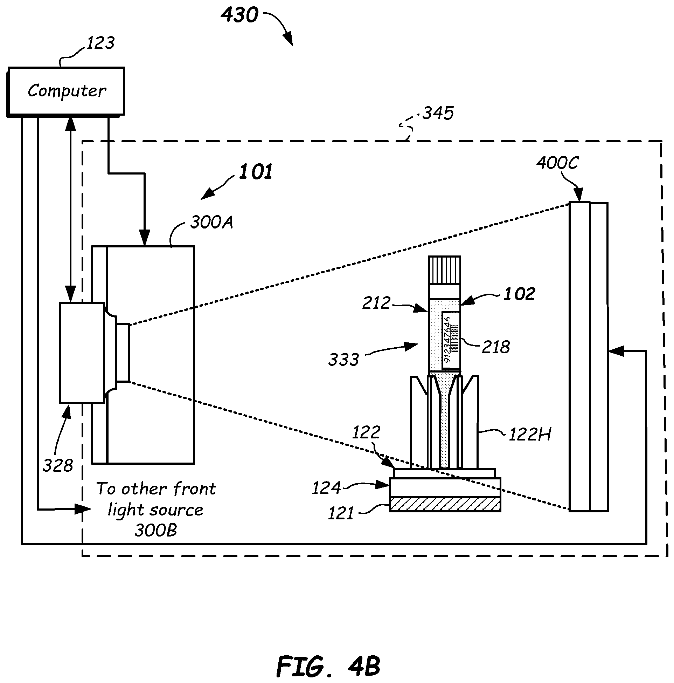

With reference to FIGs. 4A-4B, an embodiment of a quality check module 430 is shown and described. Quality check module 430 as shown may be configured and adapted to automatically characterize a physical structure (e.g., size) of the specimen container 102. The characterization method may be carried out by the quality check module 430 prior to being automatically processed by one or more of the analyzers 106, 108, 110. In this manner, the size (e.g., width W and Height HT) of the specimen container 102 is known for any subsequent processing. The quality check module 430 may also be used to quantify the specimen container 102, i.e., quantify certain physical dimensional characteristics of the specimen container 102, such as the location of TC, HT, and/or W of the specimen container 102, and/or a color of, and/or type of, the cap 214.

In addition to the specimen container quantification, other detection methods may take place on the specimen 212 contained in the specimen container 102 at the quality check module 430. For example, the quality check module 430 may be used to quantify the specimen 212, i.e., determine certain physical dimensional characteristics of the specimen 212 (e.g., a physical location of LA, SB, and/or determination of HSP, HSB, and/or HTOT, and/or a volume of the serum or plasma portion and/or a volume of the settled blood portion.

Again referring to 4A and 4B, the quality check module 430 in an inexpensive form may include a single (one and only one) calibrated image capture device 328 (e.g., single conventional digital camera such as a color or monochrome camera), or a lens system coupled with a charged coupled device (CCD), an array of photodetectors, a CMOS sensor, or the like. For example, a single calibrated image capture device 328 may be configured to capture an image of a specimen container 102 and specimen 212 at an imaging location 333 from a single viewpoint. In this embodiment, the specimen container 102 may be positioned in a rotational orientation so that a clear image of the specimen 212 is possible, such as by a user or a robot determining an unobstructed orientation (orientation unobstructed by label 218) and then inserting the specimen container in the a carrier 122 in that orientation.

This embodiment of the quality check module 430 comprising a single image capture device 328, in addition to determining the geometrical attributes of the specimen container 102 (e.g., width W and height HT), may be used to prescreen for HIL such as is described in US10,816,538 to Kluckner et al. entitled "Methods and Apparatus for Detecting an Interferent in a Specimen" and/or prescreening for the presence of an artifact, such as is described in US10,746,665 to Kluckner et al. entitled "Methods and Apparatus for Classifying an Artifact in a Specimen. For example, backlighting using a backlighting source 400C, such as a panelized light source may be used to perform HIL pre-screening.

In one or more embodiments, the characterization method of determining a 3D center location 350 may be undertaken using characterization apparatus 101 as a subcomponent of the quality check module 430. Characterization apparatus 101 includes one or more lighting sources 300A, 300B, calibrated image capture device 328, and calibration object 325 as described above in FIG. 3B, and the characterization apparatus 101 and the characterization method can be carried out within the quality check module 430. Knowing the 3D center location 350 at the imaging location 333 can be used as a rough estimate of the 3D center location elsewhere along the track 121, at least on any linear segments thereof. If a more refined 3D center location determination is desired at another location, then a characterization apparatus 101 and the characterization method can be carried out at that location.

In operation, each of the front-lighted and back-lighted images captured by the quality check module 430 may be triggered and captured responsive to a triggering signal. The triggering signal may be generated by the computer 123 and provided in communication lines coupled to the computer 123. Each of the captured images may be processed according to one or more embodiments of the characterization method provided herein. In particular, image processing may be used to determine the width W, height HT. In addition a cap color and cap type may be determined using known methods. Moreover prescreening for HIL and/or the presence of an artifact may be determined, such as using a back-lighted image provided by backlighting with light source 400C.

To improve discrimination, more than one wavelength spectra may be used. Multi-spectral images may then be captured by the image capture device 328. Each of the color spectral images (represented by a nominal wavelength with some relatively narrow wavelength band) is captured, one after another, at one or more exposures (e.g., 4-8 or more exposures). Each exposure may for a different length of time. The spectral images may be taken in any order, such as red at multiple exposures, green at multiple exposures, and blue at multiple exposures. For the detection method, transmittance images may be computed, wherein each transmittance image (for each of R, G, and B illumination) can be computed from optimally-exposed images. The optimally-exposed images may be normalized by their respective per-pixel intensity.

In one or more embodiments, the characterization apparatus 101 and quality check module 430 may include a housing 345 that may at least partially surround or cover the track 121 and provide a closed or semi-closed environment for image capture, such as exterior light influences may be minimized. The specimen container 102 may be located inside the housing 345 during each image capture. Housing 345 may include one or more doors to allow the carrier 122 to enter and/or exit the housing 345. In some embodiments, the ceiling may include an opening to allow a specimen container 102 to be loaded into a carrier 122 stationed inside the housing 345 by a robot (e.g., robot 124) including moveable robot grippers from above, such as when the characterization apparatus 101 and/or quality check module 430 is located at the loading area 105. In cases where front lighting is used and no backlighting (e.g., FIGs. 3A-3C), the characterization apparatus 101 may include a backstop wall in the housing 345 to provide improved image contrast.

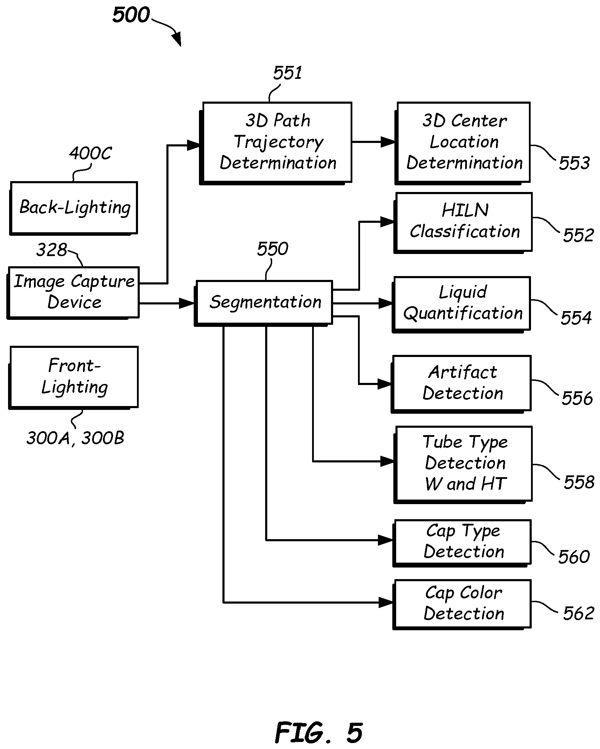

FIG. 5 illustrates a functional diagram 500 of a characterization apparatus and characterization method wherein the characterization of the specimen container 102 containing the specimen 212 is just one of the many items that may be characterized or classified by a broader method using the quality check module 430. According to one or more embodiments of the method, images are captured, such as by calibrated image capture device 328 (e.g., calibrated monochrome camera). The images captured by image capture device 328 may be multi-spectral and/or multi-exposure images, as discussed above. In particular, multiple exposures (e.g., 4-8 or more exposures) may be taken for each wavelength of light used for illumination (e.g., R, G, and B). Front-lighted images may be captured (obtained) using front-lighting sources 300A, 300B and back-lighted images may be obtained using backlight light source 400C as described in FIGs. 4A-4B. Optionally, front illuminated multi-exposure images using a white light sources and using a color camera.

The images may then be further processed to determine segmentation 550 in the manner described in US 10,816, 538 to Kluckner et al. and entitled "Methods And Apparatus For Detecting An Interferent In A Specimen" and US201910041318 to Wissmann et al. entitled "Methods And Apparatus For Imaging A Specimen Container Using Multiple Exposures." Other suitable segmentation methods based on artificial intelligence, such as convolutional neural networks (CNN's) may be used. In some embodiments, the images from front-lighting may be best used for segmentation 550. Likewise, the images captured using back-lighting may be best used for HILN classification 552 and/or artifact detection 556 using methods described above.

Liquid quantification 554 may also be carried out following segmentation 550. Quantifying the liquid may involve the determination of certain physical dimensional characteristics of the specimen 212 such as a physical location of LA, SB, and/or determination of HSP, HSB, and/or HTOT, and/or a volume of the serum or plasma portion and/or a volume of the settled blood portion. The identification may be accomplished by selecting the pixels at these demarcation areas and averaging their location values in pixel space to obtain a value for LA and SB. From this information, the volume of the serum or plasma portion 212SP may be determined by using the width W and the cross sectional shape of the specimen container 102. Correlation from pixel space to mechanical measurements may be accomplished by using any suitable calibration method to calibrate pixel space in pixels to mechanical space in mm.

Further characterization of the specimen container 102 may also be accomplished according to the characterization method such as determination of the 3D center location 350. As discussed above, the 3D path trajectory is first determined using a 3D path trajectory determination 551, followed by determination of the 3D center location 350 in 3D center location determination block 553. Tube type detection 558, cap type detection 560, and cap color detection 562 may be achieved based on processing the images from image capture device 328 using conventional methods.

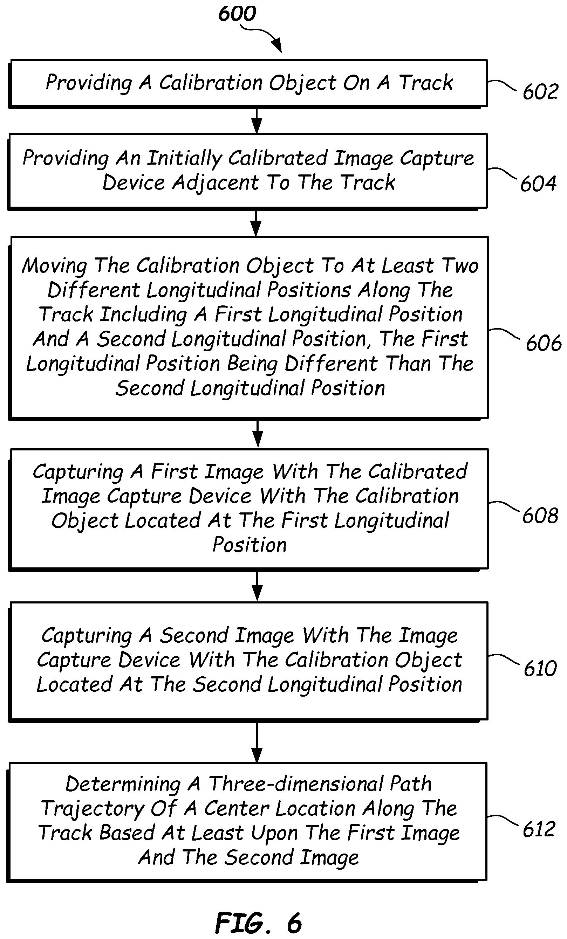

FIG. 6 illustrates a flowchart of a characterization method 600 of determining a location (3D center location 350) of a specimen container (e.g., specimen container 102) at an imaging location on a track (e.g., track 121) according to one or more embodiments. The method 600 includes, in block 602, providing a calibration object (e.g., calibration object 235) on the track, and in block 604, providing an initially calibrated image capture device (e.g., calibrated image capture device 328) adjacent to the track. Calibration of the initially calibrated image capture device 328 may be by any suitable method, such as by using a marker grid of known dimensions (e.g., (e.g. checkboard or Hoffman markers) and using a non-linear refinement technique to optimize the intrinsic parameters such as focal length, image center, skew, and distortion coefficients.

The method 600 further includes, in block 606, moving the calibration object to at least two different longitudinal positions along the track 121 including a first longitudinal position (e.g., longitudinal position A of FIG. 3B) and a second longitudinal position (e.g., longitudinal position B of FIG. 3B), the first longitudinal position being different than the second longitudinal position, and in block 608, capturing a first image with the calibrated image capture device with the calibration object 325 located at the first longitudinal position A, and in block 610, capturing a second image with the image capture device with the calibration object 325 located at the second longitudinal position B. Once the images are obtained, the method 600 includes, in block 612, determining a three-dimensional path trajectory 344 of a center location along the track (the segment of the track 121 within the imaging area 335) based at least upon the first image and the second image.

Once the three-dimensional path trajectory (three-dimensional path trajectory 344) is known within the imaging area 335, it may be used to determine the 3D center location (e.g., 3D center location 350) of any specimen container 102 brought into the imaging area on carrier 122.

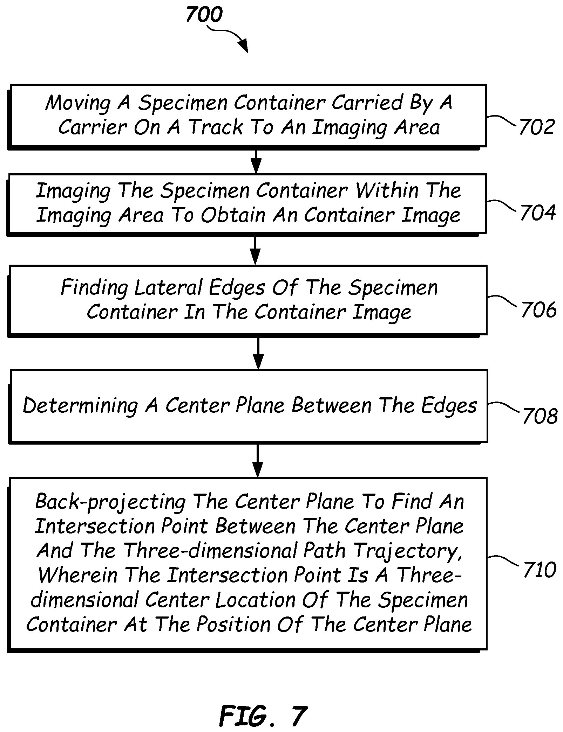

As described in FIG. 7, a flowchart of a method 700 of determining a 3D center location (e.g., 3D center location 350) of a specimen container (e.g., specimen container 102) on a track (e.g., track 121) is provided according to one or more embodiments. The method 700 includes, in block 702, moving a specimen container (e.g., specimen container 102) carried by a carrier (e.g., carrier 122) on the track (e.g., track 121) to an imaging area (e.g., imaging area 335). No exact location for imaging within the imaging area 335 is required. Preferably, the specimen container 102 can be stopped in the imaging area 335 for imaging, although if the image capture speed is sufficient, the specimen container 102 may not need to be stopped thereat. Next, in block 704, the method includes imaging the specimen container (e.g., specimen container 102) within the imaging area (e.g., imaging area 335) to obtain a container image (e.g., container image 336). The method 700 further includes finding a center plane (e.g., center plane 346), such as by, in block 706, finding lateral edges (e.g., edges 341, 342) of the specimen container (e.g., specimen container 102) in the container image (e.g., container image 336), and in block 708, determining a center plane (e.g., center plane 346) between the edges. Finally, the method 700 operates to back-project the center plane to find an intersection point between the center plane 346 and the three-dimensional path trajectory 344 (e.g., from previously described method 600), wherein the intersection point is a 3D center location 350 of the specimen container 102 at the position of the center plane 346.

As part of the edge finding block 706, the method 700 can include identifying a width W of the specimen container 102. Pixel width can simply be converted to distance in mm based upon the calibration of the image capture device 328. Height HT of the specimen container 102 may be determined using a similar edge finding routine wherein the top of the tube 213 at TC is determined. Edge finding may be by segmentation or otherwise looking for transitions in light intensity above a threshold within an area in the imaging area 335 where the tube-cap interface TC may be expected to be located.

In some embodiments, once the specimen container 102 has been given a characterization of size, such as from width W and height HT, a volume of the specimen 212 may be obtained. The inner width may be determined such as by using a lookup table based upon the size of the specimen container 102. The inner width may be used to accurately calculate volume of the serum or plasma portion 212SP and/or the volume of the settled blood portion 212 SB based on the location of the serum-blood interface SB and the liquid-air interface LA obtained from segmentation, for example.

Accordingly, based on the foregoing it should be apparent that the characterization methods 600, 700 carried out by the characterization apparatus 101, which may be included in a quality check module 130, 430 or may be a stand-alone characterization apparatus 101, may result in a rapid characterization of the 3D trajectory path 344 and the 3D center location 350 of the specimen container 102. Physical attributes of the specimen container 102 such as tube size (W and HT), cap type, and cap color can also be obtained using the characterization apparatus 101. In some embodiments including back-lighting, such as shown in FIGs. 4A-4B, HIL detection and/or artifact detection may also be accomplished.

**Claims**

1.    A computer implemented method of determining a location of a specimen container (102) on a track (121), comprising:

   providing a calibration object (325) on the track (121);
   providing an initially calibrated image capture device (328) adjacent to the track (121);
   moving the calibration object (325) to at least two different longitudinal positions along the track (121) including a first longitudinal position (A) and a second longitudinal position (B), the first longitudinal position (A) being different than the second longitudinal position (B);
   capturing a first image with the initially calibrated image capture device (328) with the calibration object (325) located at the first longitudinal position (A);
   capturing a second image with the initially calibrated image capture device (328) with the calibration object (325) located at the second longitudinal position (B); and
   determining a three-dimensional path trajectory of a center location (340) of the calibration object (325) along the track (121) based at least upon the first image and the second image; **characterized in that** the method further comprises:

   moving a specimen container (102) carried by a carrier (122) on the track (121) to an imaging area (335);
   imaging the specimen container (102) within the imaging area (335) to obtain an container image (336);
   finding lateral edges (341, 342) of the specimen container (102) in the container image (336), wherein the lateral edges are positioned in X dimension and having the same height in y dimension as the center location (340);
   determining a center plane (346) between the lateral edges (341, 342), wherein the center plane (346) is perpendicular to the lateral edges; and
   back-projecting the center plane (346) to find an intersection point between the center plane (346) and the three-dimensional path trajectory, wherein the intersection point is a three-dimensional center of the specimen container (102) at a position of the center plane (346).

2.    The method of claim 1, further comprising stopping the specimen container (102) on the track (121) within the imaging area (335) when imaging.

3.    The method of claim 1, comprising determining a width W of the specimen container (102).

4. The method of claim 1, comprising determining a height **HT** of the specimen container (102).

5. The method of claim 1, wherein the calibration object (325) comprises a three-dimensional tool with known geometry, and one or more calibrated patterns provided thereon.

6. The method of claim 1, wherein the calibration object (325) comprises a V-shaped marker tool including at least two planar surfaces, wherein the V-shaped marker tool preferably includes Hoffman markers thereon.

7. The method of claim 1, comprising computing a relative extrinsic pose of a three-dimensional center of the calibration object (325) with respect to the initially calibrated image capture device (328) for at least the first image and the second image, wherein the computing of the relative extrinsic poses is preferably accomplished using Perspective-n-Point.

8. The method of claim 1, comprising capturing one or more additional images with the initially calibrated image capture device (328) with the specimen container (102) located at one or more additional longitudinal positions along the track.

9. A specimen testing apparatus, comprising:

   a track (121);
   specimen carriers moveable on the track (121), the specimen carriers configured to carry specimen containers (102); and
   one or more characterization apparatus arranged around the track (121), each of the one or more characterization apparatus, comprising:

      a calibrated image capture device (328) adjacent to the track (121), and
      a computer (123) coupled to the calibrated image capture device (328) and configured to:

         determine a three-dimensional path trajectory of a center location (340) of the calibration object (325) along a segment of the track (121) based at least upon a first image and a second image taken of a calibration object (325) at an imaging area (335),
         cause a specimen container (102) carried by a carrier on the track (121) to move to the imaging area (335),
         cause imaging of the specimen container (102) within the imaging area (335) to obtain an container image,

      **characterized in that** the computer (123) is further configured to:

         determining a center plane (346) between lateral edges of the specimen container (102), wherein the lateral edges are positioned in X dimension and having the same height in y dimension as the center location (340), and
         back-project the center plane (346) to find an intersection point between the center plane (346) and the three-dimensional path trajectory, wherein the intersection point is a three-dimensional center of the specimen container (102) at a position of the center plane (346), and wherein the center plane (346) is perpendicular to the lateral edges (341, 342).

**Patentansprüche**

1. Computerimplementiertes Verfahren zum Bestimmen eines Orts eines Probenbehälters (102) auf einer Bahn (121), Folgendes umfassend:

   Bereitstellen eines Kalibrierobjekts (325) auf der Bahn (121);
   Bereitstellen einer anfänglich kalibrierten Bildaufnahmevorrichtung (328) angrenzend an die Bahn (121);
   Bewegen des Kalibrierobjekts (325) zu mindestens zwei unterschiedlichen Längspositionen entlang der Bahn (121), einschließlich einer ersten Längsposition (A) und einer zweiten Längsposition (B), wobei die erste Längsposition (A) sich von der zweiten Längsposition (B) unterscheidet;
   Erfassen eines ersten Bildes mit der anfänglich kalibrierten Bildaufnahmevorrichtung (328), wobei sich das Kalibrierobjekt (325) an der ersten Längsposition (A) befindet;
   Erfassen eines zweiten Bildes mit der anfänglich kalibrierten Bildaufnahmevorrichtung (328), wobei sich das Kalibrierobjekt (325) an der zweiten Längsposition (B) befindet; und

Bestimmen einer dreidimensionalen Bahntrajektorie einer Mittenposition (340) des Kalibrierobjekts (325) entlang der Bahn (121) basierend mindestens auf dem ersten Bild und dem zweiten Bild; **dadurch gekennzeichnet, dass** das Verfahren ferner Folgendes umfasst:

Bewegen eines Probenbehälters (102), der von einem Träger (122) auf der Bahn (121) getragen wird, zu einem Bildgebungsbereich (335);

Abbilden des Probenbehälters (102) innerhalb des Bildgebungsbereichs (335), um ein Behälterbild (336) zu erhalten;

Finden von Seitenkanten (341, 342) des Probenbehälters (102) in dem Behälterbild (336), wobei die Seitenkanten in X-Dimension positioniert sind und in y-Dimension die gleiche Höhe wie die Mittelposition (340) aufweisen;

Bestimmen einer Mittelebene (346) zwischen den lateralen Kanten (341, 342), wobei die Mittelebene (346) senkrecht zu den lateralen Kanten ist; und

Rückprojizieren der Mittelebene (346), um einen Schnittpunkt zwischen der Mittelebene (346) und der dreidimensionalen Bahntrajektorie zu finden, wobei der Schnittpunkt ein dreidimensionales Zentrum des Probenbehälters (102) an einer Position der Mittelebene (346) ist.

2. Verfahren nach Anspruch 1, ferner umfassend das Stoppen des Probenbehälters (102) auf der Bahn (121) innerhalb des Bildgebungsbereichs (335) bei der Bildgebung.

3. Verfahren nach Anspruch 1, umfassend das Bestimmen einer Breite W des Probenbehälters (102).

4. Verfahren nach Anspruch 1, umfassend das Bestimmen einer Höhe HT des Probenbehälters (102).

5. Verfahren nach Anspruch 1, wobei das Kalibrierobjekt (325) ein dreidimensionales Werkzeug mit bekannter Geometrie und ein oder mehrere darauf bereitgestellte kalibrierte Muster umfasst.

6. Verfahren nach Anspruch 1, wobei das Kalibrierobjekt (325) ein V-förmiges Markierungswerkzeug umfasst, das mindestens zwei planare Oberflächen beinhaltet, wobei das V-förmige Markierungswerkzeug vorzugsweise Hoffman-Marker darauf aufweist.

7. Verfahren nach Anspruch 1, umfassend das Berechnen einer relativen extrinsischen Haltung eines dreidimensionalen Zentrums des Kalibrierobjekts (325) in Bezug auf die anfänglich kalibrierte Bildaufnahmevorrichtung (328) für mindestens das erste Bild und das zweite Bild, wobei das Berechnen der relativen extrinsischen Haltung vorzugsweise unter Verwendung von Perspektive-n-Punkt durchgeführt wird.

8. Verfahren nach Anspruch 1, umfassend das Aufnehmen von einem oder mehreren zusätzlichen Bildern mit der anfänglich kalibrierten Bildaufnahmevorrichtung (328), wobei sich der Probenbehälter (102) an einer oder mehreren zusätzlichen Längspositionen entlang der Bahn befindet.

9. Probenprüfvorrichtung, die Folgendes umfasst:

eine Bahn (121);

auf der Bahn (121) bewegliche Probenträger, wobei die Probenträger zum Tragen von Probenbehältern (102) ausgebildet sind; und

eine oder mehrere Charakterisierungsvorrichtungen, die um die Bahn (121) angeordnet sind, wobei jede der einen oder mehreren Charakterisierungsvorrichtungen Folgendes umfasst:

eine kalibrierte Bildaufnahmevorrichtung (328) angrenzend an die Bahn (121), und

einen Computer (123), der mit der kalibrierten Bildaufnahmevorrichtung (328) gekoppelt und zu Folgendem ausgebildet ist:

Bestimmen einer dreidimensionalen Bahntrajektorie einer Mittenposition (340) des Kalibrierobjekts (325) entlang eines Segments der Bahn (121) basierend auf mindestens einem ersten Bild und einem zweiten Bild, die von einem Kalibrierobjekt (325) an einem Bildgebungsbereich (335) aufgenommen wurden,

Bewirken, dass sich ein Probenbehälter (102), der von einem Träger auf der Bahn (121) getragen wird, zu dem Bildgebungsbereich (335) bewegt,

Bewirken einer Bildgebung des Probenbehälters (102) innerhalb des Bildgebungsbereichs (335), um ein Behälterbild zu erhalten,

**dadurch gekennzeichnet, dass** der Computer (123) ferner für Folgendes ausgebildet ist:

Bestimmen einer Mittelebene (346) zwischen lateralen Kanten des Probenbehälters (102), wobei die lateralen Kanten in X-Dimension positioniert sind und in y-Dimension die gleiche Höhe wie die Mittenposition (340) aufweisen, und

Rückprojizieren der Mittelebene (346), um einen Schnittpunkt zwischen der Mittelebene (346) und der dreidimensionalen Bahntrajektorie zu finden, wobei der Schnittpunkt ein dreidimensionaler Mittelpunkt des Probenbehälters (102) an einer Position der Mittelebene (346) ist, und wobei die Mittelebene (346) senkrecht zu den Seitenkanten (341, 342) steht.

**Revendications**

1. Procédé mis en œuvre par ordinateur permettant la détermination d'un emplacement d'un contenant d'échantillon (102) sur une piste (121), comprenant :

la fourniture d'un objet d'étalonnage (325) sur la piste (121) ;

la fourniture d'un dispositif de capture d'image initialement étalonné (328) adjacent à la piste (121) ;

le déplacement de l'objet d'étalonnage (325) vers au moins deux positions longitudinales différentes le long de la piste (121) comportant une première position longitudinale (A) et une seconde position longitudinale (B), la première position longitudinale (A) étant différente de la seconde position longitudinale (B) ;

la capture d'une première image avec le dispositif de capture d'image initialement étalonné (328), l'objet d'étalonnage (325) étant situé à la première position longitudinale (A),

la capture d'une seconde image avec le dispositif de capture d'image initialement étalonné (328), l'objet d'étalonnage (325) étant situé à la seconde position longitudinale (B), et

la détermination d'une trajectoire de chemin tridimensionnelle d'un emplacement central (340) de l'objet d'étalonnage (325) le long de la piste (121) à partir au moins de la première image et de la seconde image ;

**caractérisé en ce que** le procédé comprend en outre :

le déplacement d'un récipient d'échantillon (102) porté par un support (122) sur la piste (121) jusqu'à une zone d'imagerie (335) ;

l'imagerie du récipient d'échantillon (102) à l'intérieur de la zone d'imagerie (335) pour obtenir une image de récipient (336) ;

le fait de trouver des bords latéraux (341, 342) du récipient d'échantillon (102) dans l'image de récipient (336), les bords latéraux étant positionnés dans la dimension X et ayant la même hauteur dans la dimension y que l'emplacement central (340) ;

la détermination d'un plan central (346) entre les bords latéraux (341, 342), le plan central (346) étant perpendiculaire aux bords latéraux ; et

la rétroprojection du plan central (346) pour trouver un point d'intersection entre le plan central (346) et la trajectoire de chemin tridimensionnelle, le point d'intersection étant un centre tridimensionnel du récipient d'échantillon (102) à une position du plan central (346).

2. Procédé selon la revendication 1, comprenant en outre l'arrêt du récipient d'échantillon (102) sur la piste (121) à l'intérieur de la zone d'imagerie (335) lors de l'imagerie.

3. Procédé selon la revendication 1, comprenant la détermination d'une largeur W du récipient d'échantillon (102).

4. Procédé selon la revendication 1, comprenant la détermination d'une hauteur HT du récipient d'échantillon (102).

5. Procédé selon la revendication 1, dans lequel l'objet d'étalonnage (325) comprend un outil tridimensionnel avec une géométrie connue, et un ou plusieurs motifs étalonnés fournis sur celui-ci.

6. Procédé selon la revendication 1, dans lequel l'objet d'étalonnage (325) comprend un outil marqueur en forme de V comportant au moins deux surfaces planes, dans lequel l'outil marqueur en forme de V comporte de préférence des marqueurs Hoffman sur celui-ci.

**EP 4 292 049 B1**

7. Procédé selon la revendication 1, comprenant le calcul d'une pose extrinsèque relative d'un centre tridimensionnel de l'objet d'étalonnage (325) par rapport au dispositif de capture d'image initialement étalonné (328) pour au moins la première image et la seconde image, dans lequel le calcul des poses extrinsèques relatives est réalisé de préférence en utilisant la méthode Perspective-n-Point.

8. Procédé selon la revendication 1, comprenant la capture d'une une ou plusieurs d'images supplémentaires avec le dispositif de capture d'image initialement étalonné (328), le récipient d'échantillon (102) étant situé à une ou plusieurs positions longitudinales supplémentaires le long de la piste.

9. Appareil de test d'échantillon, comprenant :

une piste (121) ;
des supports d'échantillon mobiles sur la piste (121), les supports d'échantillon étant conçus pour transporter des récipients d'échantillon (102) ; et
un ou plusieurs appareils de caractérisation agencés autour de la piste (121), chacun parmi le ou les appareils de caractérisation comprenant :

un dispositif de capture d'image étalonné (328) adjacent à la piste (121), et
un ordinateur (123) couplé au dispositif de capture d'image étalonné (328) et configuré pour :

déterminer une trajectoire de chemin tridimensionnelle d'un emplacement central (340) de l'objet d'étalonnage (325) le long d'un segment de la piste (121) sur la base au moins d'une première image et d'une seconde image prises d'un objet d'étalonnage (325) au niveau d'une zone d'imagerie (335),
déplacer un récipient d'échantillon (102) porté par un support sur la piste (121) jusqu'à une zone d'imagerie (335),
imager le récipient d'échantillon (102) à l'intérieur de la zone d'imagerie (335) pour obtenir une image de récipient,
**caractérisé en ce que** l'ordinateur (123) est en outre configuré pour :

déterminer un plan central (346) entre des bords latéraux du récipient d'échantillon (102), les bords latéraux étant positionnés dans la dimension X et ayant la même hauteur dans la dimension y que l'emplacement central (340), et
rétroprojeter le plan central (346) pour trouver un point d'intersection entre le plan central (346) et la trajectoire de chemin tridimensionnelle, le point d'intersection étant un centre tridimensionnel du récipient d'échantillon (102) à une position du plan central (346), et le plan central (346) étant perpendiculaire aux bords latéraux (341, 342).

**16**

**FIG. 1**

**FIG. 2**

**FIG. 3A**

FIG. 3B

**FIG. 3C**

FIG. 3D

FIG. 4A

**FIG. 4B**

500

551

3D Path Trajectory Determination

3D Center Location Determination — 553

400C

Back-Lighting

328

Image Capture Device

Front-Lighting

300A, 300B

550

Segmentation

HILN Classification — 552

Liquid Quantification — 554

Artifact Detection — 556

Tube Type Detection W and HT — 558

Cap Type Detection — 560

Cap Color Detection — 562

FIG. 5

*600*

| Providing A Calibration Object On A Track | 602 |

↓

| Providing An Initially Calibrated Image Capture Device Adjacent To The Track | 604 |

↓

| Moving The Calibration Object To At Least Two Different Longitudinal Positions Along The Track Including A First Longitudinal Position And A Second Longitudinal Position, The First Longitudinal Position Being Different Than The Second Longitudinal Position | 606 |

↓

| Capturing A First Image With The Calibrated Image Capture Device With The Calibration Object Located At The First Longitudinal Position | 608 |

↓

| Capturing A Second Image With The Image Capture Device With The Calibration Object Located At The Second Longitudinal Position | 610 |

↓

| Determining A Three-dimensional Path Trajectory Of A Center Location Along The Track Based At Least Upon The First Image And The Second Image | 612 |

FIG. 6

**700**

```
┌─────────────────────────────────────────┐
│  Moving A Specimen Container Carried By A │ ⌐702
│   Carrier On A Track To An Imaging Area   │
└─────────────────────────────────────────┘
                    │
                    ▼
┌─────────────────────────────────────────┐
│ Imaging The Specimen Container Within The │ ⌐704
│  Imaging Area To Obtain An Container Image │
└─────────────────────────────────────────┘
                    │
                    ▼
┌─────────────────────────────────────────┐
│   Finding Lateral Edges Of The Specimen   │ ⌐706
│    Container In The Container Image        │
└─────────────────────────────────────────┘
                    │
                    ▼
┌─────────────────────────────────────────┐
│ Determining A Center Plane Between The Edges │ ⌐708
└─────────────────────────────────────────┘
                    │
                    ▼
┌─────────────────────────────────────────┐
│ Back-projecting The Center Plane To Find An │
│ Intersection Point Between The Center Plane │
│  And The Three-dimensional Path Trajectory, │ ⌐710
│   Wherein The Intersection Point Is A Three-│
│  dimensional Center Location Of The Specimen│
│ Container At The Position Of The Center Plane│
└─────────────────────────────────────────┘
```

**FIG. 7**

**EP 4 292 049 B1**

**REFERENCES CITED IN THE DESCRIPTION**

**Patent documents cited in the description**

- US 63148529
- US 2017124704 A1
- US 20110041318 A
- US 10816538 B, Kluckner
- US 10746665 B, Kluckner
- US 10816 A
- US 538 A, Kluckner
- US 201910041318 A, Wissmann